# DEMANDE DE BREVET EUROPEEN

(11) **EP 4 657 294 A1**
(43) Date de publication de la demande: **03.12.2025**
(21) Numéro de dépôt: 25176700.0
(22) Date de dépôt: 15.05.2025
(51) Int. Cl.: G06F 21/57, G06F 21/74, G06F 21/86

(54) **SYSTÈME SUR PUCE COMPORTANT UN PROCESSEUR AYANT UNE FONCTIONNALITÉ DE DÉBOGAGE ET UN CIRCUIT D'AUTOPROTECTION, ET PROCÉDÉ D'AUTOPROTECTION CORRESPONDANT**

(30) Priorité: 29.05.2024 FR 2405529
(71) Demandeur: STMicroelectronics International N.V., 1228 Plan-les-Ouates, Geneva (CH)
(72) Inventeur: BENHMMADI, Jawad, 38800 LE-PONT-DE-CLAIX (FR)
(74) Mandataire: Casalonga

(57) **Abrégé**

Le système sur puce (SOC) comporte un processeur (CPU) ayant une fonctionnalité de débogage d'un programme, configuré pour avoir des paramètres de débogage déterminés par des signaux de commande du débogage (dbgen, niden, spiden, spniden). Un circuit d'autoprotection (TAMP) est configuré pour détecter des états représentatifs d'une autorisation d'accès du débogage, sur lesdits signaux de commande du débogage.

## Description

Des modes de réalisation et de mise en œuvre concernent les systèmes sur puce, c'est-à-dire des circuits intégrés embarquant un système complet tels que les microcontrôleurs, et plus particulièrement les méthodes et moyens d'autoprotection contre des attaques d'ingénierie inversé.

Dans des processus d'ingénierie inversée, on appel attaques les mises en œuvre visant par exemple à accéder à des informations sensibles ou secrètes, telles que des données de chiffrement ou le code d'un programme.

A cet égard il existe des techniques dirigeant les attaques sur une fonctionnalité de débogage, d'une unité centrale de calcule (« processeur »).

En effet, si les accès à la fonctionnalité de débogage sont permis, alors il est possible de lire à une adresse par une commande de débogage, typiquement via un port d'accès dédié « DAP » (pour « Debug Access Port » usuellement en anglais).

L'interface du port d'accès « DAP » est classiquement capable de filtrer les requêtes de débogage, en fermant complément l'accès au processeur.

Par exemple, le propriétaire du système sur puce, usuellement appelé « fabriquant d'équipement d'origine » ou « OEM » (pour « Original Equipment Manufacturer » en anglais), bénéficie d'un état initial « complètement ouvert » du système, où l'accès à la fonctionnalité de débogage est entièrement permis.

Au fur et à mesure du développement logiciel, l'accès à la fonctionnalité de débogage va être progressivement restreint, jusqu'à un état entièrement fermé.

En particulier, la succession d'état pourra comprendre l'état « complétement ouvert » où l'application n'est pas encore développée ; puis un état « approvisionnement » permettant d'écrire des secrets (clés, secret, ...) dans le système ; puis un état « approvisionné », lorsqu'on vient de finir la phase d'approvisionnement ; puis par exemple un état de « zone de confiance fermée » (ou « trust zone closed » en anglais) lorsque le développement de l'application « sécurisée » (ou « secure » en anglais) est terminé ; puis l'état « complétement fermé » où le développement de l'application finale est terminé.

Typiquement, entre par exemple l'état « zone de confiance fermée » et l'état « complétement fermé », un autre client peut être en charge de coder l'application non-sécurisée, par exemple le système d'exploitation « riche » (usuellement « Rich Operating system » en anglais), et devoir bénéficier des fonctionnalités de débogage du processeur.

Et, dans ce cadre, il existe une vulnérabilité, par exemple par une attaque matérielle du type injection de fautes par impulsions laser, sur des signaux de commande de l'isolation du débogage.

Les signaux de commande de l'isolation du débogage permettent par exemple d'autoriser ou d'empêcher l'accès à des informations ayant un droit d'accès sécurisé, pendant le débogage. En outre, les signaux de commande de l'isolation du débogage peuvent aussi déterminer par exemple l'autorisation d'un débogage invasif (permettant une lecture de variables, une introduction de points de rupture, etc) ou non-invasif (communiquant seulement une trace d'exécution).

En effet, dans l'état « zone de confiance fermée » par exemple, l'accès aux zones sécurisé devrait être impossible, or, en forçant avec une attaque matérielle sur par exemple le signal de commande de l'isolation du débogage permettant l'accès invasif de niveau sécurisé, des informations secrètes peuvent être obtenue via la fonctionnalité de débogage.

Il existe ainsi un besoin de se prémunir contre cette vulnérabilité.

A cet égard, selon un aspect il est proposé un système sur puce comportant un processeur ayant une fonctionnalité de débogage d'un programme, configuré pour avoir des paramètres de débogage déterminés par des signaux de commande du débogage, dans lequel un circuit d'autoprotection est configuré pour détecter des états représentatifs d'une autorisation d'accès du débogage, sur lesdits signaux de commande du débogage.

Par conséquent, si au moins l'un des signaux de commande du débogage est altéré, par exemple forcé par une attaque matérielle, dans un état commandant une autorisation d'accès (potentiellement toute autorisation de tout accès), alors cela est détecté par le circuit d'autoprotection, bien que le système permette, dans l'absolu, cet état du signal de commande du débogage. Le circuit d'autoprotection permet ainsi au système « de savoir » qu'une autorisation d'un accès est commandé par ledit signal, permettant ainsi de prendre une décision quant à la légitimité de cette commande. En cas d'illégitimité, on pourra ainsi prendre des mesures de protection du système.

Selon un mode de réalisation à cet égard, un moyen de contremesure est configuré pour activer des mesures de protection du système, en cas de détection faite par le circuit d'autoprotection et en fonction d'un état de droit d'accès du système.

Par exemple, le moyen de contremesure est mis en œuvre de façon logicielle dans un environnement sécurisé ayant l'information de l'état de droit d'accès du système, par exemple au sein d'un moyen prévu pour effectuer la gestion des droits d'accès du système sur puce. Par exemple, les mesures de protections peuvent comprendre une extinction du système sur puce, un effacement de données sensibles, voir une autodestruction du système.

Selon un mode de réalisation, le circuit d'autoprotection est configuré pour détecter un état représentatif d'une autorisation d'accès du débogage à un niveau sécurisé et/ou d'une autorisation d'accès du débogage à un niveau non-sécurisé, sur au moins un signal de commande du débogage paramétrant les droits d'accès respectifs.

Selon un mode de réalisation, le circuit d'autoprotection est configuré pour détecter un état représentatif d'une autorisation d'accès invasif du débogage et/ou d'une autorisation d'accès non-invasif du débogage, sur au moins un signal de commande du débogage paramétrant le degré invasif respectifs.

Selon un mode de réalisation, le processeur étant configuré pour fournir une information d'état du système évolutive, le circuit d'autoprotection est configuré pour faire ladite détection sur les signaux de commande du débogage dans tous les états du système, sauf dans un état initial « complétement ouvert ».

Selon un autre aspect, il est proposé un procédé d'autoprotection d'un système sur puce comprenant un processeur ayant une fonctionnalité de débogage d'un programme, des signaux de commande du débogage déterminant des paramètres de débogage du processeur, le procédé d'autoprotection comprenant une détection d'états représentatifs d'une autorisation d'accès du débogage, sur lesdits signaux de commande du débogage.

Selon un mode de mise en œuvre, le procédé comprend une détection d'un état représentatif d'une autorisation d'accès du débogage à un niveau sécurisé et/ou d'une autorisation d'accès du débogage à un niveau non-sécurisé, sur au moins un signal de commande du débogage paramétrant les droits d'accès respectifs.

Selon un mode de mise en œuvre, le procédé comprend une détection d'un état représentatif d'une autorisation d'accès invasif du débogage et/ou d'une autorisation d'accès non-invasif du débogage, sur au moins un signal de commande du débogage paramétrant le degré invasif respectifs.

Selon un mode de mise en œuvre, ladite détection sur les signaux de commande du débogage est faite dans tous les états du système, sauf dans un état initial « complétement ouvert », l'information de l'état du système évolutive étant fournie par le processeur.

Selon un mode de mise en œuvre, des mesures de protection du système sont activées en cas de détection d'au moins un état représentatif d'une autorisation d'accès du débogage, et en fonction d'un état de droit d'accès du système.

D'autres avantages et caractéristiques de l'invention apparaîtront à l'examen de la description détaillée de mode de réalisation et de mise en œuvre, nullement limitatifs, et des dessins annexés, sur lesquels les figures :
[Fig.1] ;

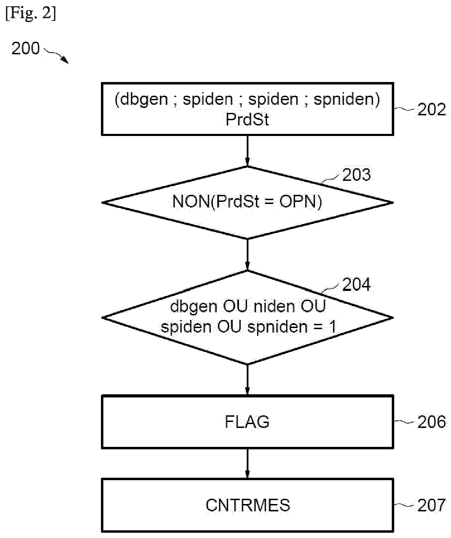

[Fig.2] illustrent des modes de réalisation et de mise en œuvre de l'invention.

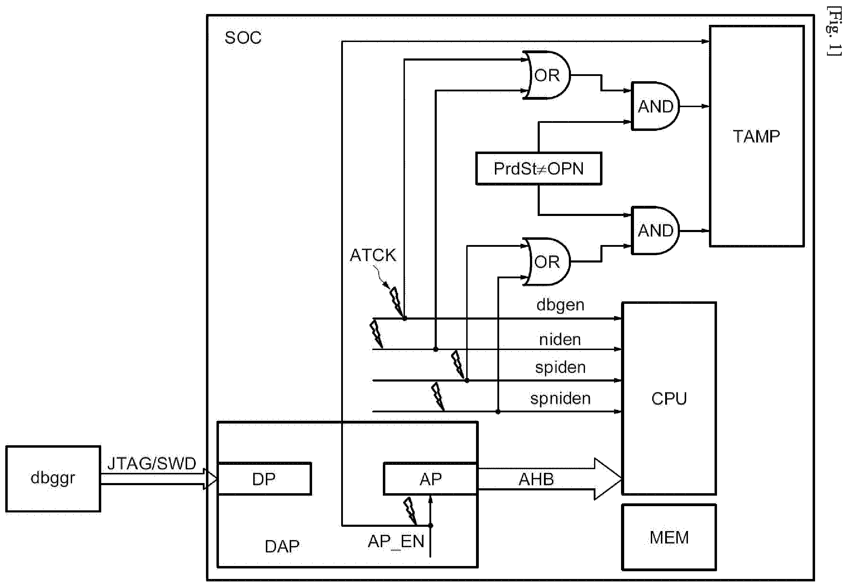

La figure 1 illustre un exemple de système sur puce SOC, comportant une unité centrale de calculs CPU, usuellement nommée processeur, apte à exécuter un code logiciel, et en particulier selon une fonctionnalité de débogage.

A cet égard, le système comporte un port d'accès dédié au débogage DAP ; ainsi que par ailleurs une mémoire MEM, pouvant par exemple contenir le code programme exécuté par le processeur, et un circuit d'autoprotection TAMP.

Un système tiers DBGGR, appelé « débogueur », peut accéder au processeur CPU pour commander la mise en œuvre du débogage, via le port d'accès de débogage DAP. Le système débogueur tiers DBGGR peut par exemple être un ordinateur de bureau sur lequel est conçu un code logiciel par un programmeur, et utilisé pour tester le code implémenté par le système sur puce SOC.

Le port d'accès de débogage DAP comporte une interface d'entrée, ou un port de débogage DP, suivant par exemple le protocole JTAG ou SWD.

L'abréviation JTAG du nom anglais « Joint Test Action Group » désigne la norme IEEE 1149.1 intitulée « Standard Test Access Port and Boundary-Scan Architecture » en anglais (soit, en français, littéralement, « Groupe d'action conjoint sur les tests » de la norme « Port d'accès de test et architecture de balayage aux limites »)

L'interface JTAG est utilisée en particulier pour du débogage intra-circuit, permettant notamment de donner un accès direct à l'intérieur du processeur, tels que par points d'arrêt, lecture et écriture des registres internes ou des mémoires internes et externes.

L'abréviation SWD des termes anglais « Serial Wire Debug » (soit en français « débogage en connexion série ») désigne une technique de débogage équivalente au JTAG et utilise la même interface de connectique.

Le port d'accès de débogage DAP comporte une interface de sortie, ou un port d'accès de bus de circuit intégré AP, accédant au processeur CPU selon un bus de circuit intégré, par exemple suivant un protocole AHB du type « bus de haute performance avancé » (« Advanced High-performance Bus » en anglais).

Par exemple un premier signal d'isolation AP_EN est prévu dans le port d'accès DAP pour déterminer l'autorisation ou non de transmettre les requêtes de débogage, depuis l'interface d'entrée DP vers l'interface de sortie DA, et ainsi notamment en fermant complément l'accès au processeur CPU.

En effet, au fur et à mesure du développement logiciel, l'accès à la fonctionnalité de débogage va être progressivement restreint, jusqu'à un état entièrement fermé où il n'est plus du tout possible d'exploiter la fonctionnalité de débogage du processeur CPU.

Ainsi, d'une part, afin de se prémunir contre une attaque matérielle apte à forcer l'état de ce premier signal d'isolation de manière à réouvrir l'accès à la fonctionnalité de débogage, on peut prévoir de surveiller l'état du premier signal d'isolation, au moyen du circuit d'autoprotection TAMP.

Une attaque matérielle apte à forcer l'état d'un tel signal peut par exemple être faite avec une technique d'injections de fautes par impulsions laser. D'autres techniques aptes à forcer l'état d'un signal peuvent exister.

Ainsi, lorsque le signal surveillé est illégitimement placé dans un état autorisant l'accès à la fonctionnalité de débogage, le circuit d'autoprotection le détecte, et le système peut être configuré pour déclencher des contre-mesures défensives de manière conditionnée sur cette détection.

En outre, d'autre part, il existe des signaux de commande de l'isolation du débogage, prévus pour autoriser ou non le processeur CPU d'accéder à des informations ayant un droit d'accès sécurisé, ou non-sécurisé, pendant le débogage.

En d'autres termes, il existe au moins un signal de commande du débogage paramétrant les droits d'accès, dont l'état est représentatif d'une autorisation d'accès du débogage à un niveau sécurisé et/ou d'une autorisation d'accès du débogage à un niveau non-sécurisé.

Aussi, il existe des signaux de commande de l'isolation du débogage, prévus pour autoriser ou non le processeur CPU à donner un accès dit « invasif » au débogage, ou un accès dit « non-invasif » au débogage.

En d'autres termes, il existe au moins un signal de commande du débogage paramétrant le degré invasif, dont l'état est représentatif d'une autorisation d'accès invasif du débogage et/ou d'une autorisation d'accès non-invasif du débogage.

Un débogage invasif permet des lectures et écritures de variables dans des registres et mémoires du système, des introductions de points de ruptures dans le programme, etc ; tandis qu'un débogage non-invasif permet seulement la communication d'une trace d'exécution du programme.

En pratique, on pourra prévoir les quatre signaux de commande du débogage suivant pour paramétrer les droits d'accès et le degré invasif du débogage :
- le signal de commande dbgen dont un premier état, par exemple l'état « vrai » ou « 1 », commande une autorisation de débogage invasif de contenu ayant un droit d'accès non-sécurisé ;
- le signal de commande niden dont un premier état, par exemple l'état « vrai » ou « 1 », commande une autorisation de débogage non-invasif de contenu ayant un droit d'accès non-sécurisé ;
- le signal de commande spiden dont un premier état, par exemple l'état « vrai » ou « 1 », commande une autorisation de débogage invasif de contenu ayant un droit d'accès sécurisé ;
- le signal de commande spniden dont un premier état, par exemple l'état « vrai » ou « 1 », commande une autorisation de débogage non-invasif de contenu ayant un droit d'accès non-sécurisé.

Le circuit d'autoprotection est ainsi configuré pour détecter des états représentatifs d'une autorisation d'accès du débogage, sur lesdits signaux de commande du débogage déterminant les paramètres du débogage mise en œuvre par le processeur.

Par conséquent, si au moins l'un des signaux de commande du débogage dbgen, niden, spiden, spniden est altéré, c'est-à-dire par exemple forcé par une attaque matérielle, et placé dans un état commandant une autorisation d'un accès, alors cela est détecté par le circuit d'autoprotection TAMP.

On pourra avantageusement prévoir que toutes les autorisations d'accès, quel que soit le type d'accès (de droit sécurisé ou de degré invasif) soient détectées par le circuit d'autoprotection TAMP.

On pourra également avantageusement prévoir de faire ladite détection dans tous les états du système, sauf dans un état initial « complétement ouvert » ; le processeur étant configuré pour fournir une donnée évolutive représentative de l'état du système.

Dans l'exemple avantageux illustré par la figure 1, on a regroupé les signaux de commandes du débogage paramétrant les droits d'accès « sécurisé » spiden, spniden, et les signaux de commandes du débogage paramétrant les droits d'accès « non-sécurisé » dbgen, niden, de manière à former deux ou trois sources de détection :
Détection d'une ouverture du débogage non sécurisé basée sur les signaux dbgen et niden : Lorsque le débogage non sécurisé est ouvert (dbgen=1 OU niden=1), un événement est détecté.

Détection d'une ouverture du débogage sécurisé basée sur les signaux spiden et spniden : Lorsque le débogage sécurisé est ouvert (spiden=1 OU spniden=1), un événement est détecté.

Optionnellement, détection d'une ouverture du port d'accès du débogage AP_EN. Lorsque le port d'accès est ouvert, un événement est détecté.

En outre, les détections d'ouverture du débogage non-sécurisé et sécurisé est conditionné cumulativement « ET » par la condition que le système n'est pas dans l'état complétement ouvert PrdSt≠OPN.

Les portes logiques offrant la condition « OU » sont désignées par la référence OR, et la porte logique offrant la condition « ET » est désignée par la référence AND.

Lorsqu'un événement est détecté, on pourra déclencher une interruption et toutes les données sensibles du système SOC (présentes dans la mémoire MEM ou dans d'autres circuits du système SOC) sont effacées.

Ainsi, le circuit d'autoprotection TAMP permet au système « de savoir » qu'une autorisation d'un accès est commandé par ledit signal, permettant de prendre une décision quant à la légitimité de cette commande. En effet, le système permet un usage normal dans lequel les signaux de commande du débogage sont utilisé pour autoriser les accès respectifs.

Une entité de confiance pourra être configurée afin de prendre ladite décision relative à la légitimité ou à l'illégitimité de l'état du signal de commande de débogage détecté.

Par exemple, l'entité de confiance peut être implémentée de façon logicielle dans un environnement sécurisé du processeur CPU, et par exemple dans un environnement ayant l'information de l'état de droit d'accès du système, par exemple intégré à un moyen de gestion des droits d'accès du système sur puce.

Par exemple l'entité de confiance est capable d'activer des mesures de protection du système, telles qu'une extinction du système sur puce, un effacement de données sensibles, voir une autodestruction du système ; en conséquence d'une détection faite par le circuit d'autoprotection et en connaissance d'un état de droit d'accès du système.

On se réfère désormais à la figure 2.

La figure 2 illustre fonctionnellement un procédé d'autoprotection 200, par exemple mis en œuvre dans le système sur puce SOC décrit précédemment en relation avec la figure 1.

Dans une étape 202, des signaux de commande du débogage (dbgen ; niden ; spiden ; spniden) ont des états logiques, par exemple « 0 » ou « 1 », pour déterminer des paramètres de débogage.

Les états logiques des signaux de commande du débogage (dbgen ; niden ; spiden ; spniden) peuvent être générés dans le fonctionnement normal du système ou par corruption du système au moyen d'une attaque physique.

Par exemple, l'état « 1 » commande une autorisation d'accès (aussi appelé « ouverture ») tandis que l'état « 0 » commande une restriction ou interdiction de l'accès (aussi appelé « fermeture »).

Optionnellement un état du système PrdSt est communiqué dans l'étape 202.

Dans une étape optionnelle 203, un test logique « NON(PrdSt=OPN) » permet de vérifier que le système n'est pas dans l'état complétement ouvert.

Dans une étape 204, une détection d'états représentatifs d'une autorisation d'accès du débogage est faite sur lesdits signaux de commande du débogage (dbgen ; niden ; spiden ; spniden), par exemple par un test logique « dbgen OU niden OU spiden OU spniden = 1 » vérifiant qu'au moins l'un desdits signaux soit à l'état « 1 ».

En alternative (voir figure 1), le procédé 200 comprend à l'étape 204 une détection d'un état représentatif d'une autorisation d'accès du débogage à un niveau sécurisé et/ou d'une autorisation d'accès du débogage à un niveau non-sécurisé, sur au moins un signal de commande du débogage paramétrant les droits d'accès respectifs.

A cet effet, on peut prévoir deux tests logiques parallèles « dbgen OU niden = 1 », vérifiant d'une part qu'au moins l'un desdits signaux commande une ouverture du débogage non-sécurisé ; et « spiden OU spniden = 1 » vérifiant d'une part qu'au moins l'un desdits signaux commande une ouverture du débogage sécurisé.

Dans une autre alternative (non-représentée) le procédé 200 comprend à l'étape 204 une détection d'un état représentatif d'une autorisation d'accès invasif du débogage et/ou d'une autorisation d'accès non-invasif du débogage, sur au moins un signal de commande du débogage paramétrant le degré invasif respectifs.

A cet effet, on peut prévoir deux tests logiques parallèles « dbgen OU spiden = 1 », vérifiant d'une part qu'au moins l'un desdits signaux commande une ouverture du débogage intrusif ; et « niden OU spniden = 1 » vérifiant d'une part qu'au moins l'un desdits signaux commande une ouverture du débogage non-intrusif.

Dans une étape 206, une information FLAG est enregistrée, par exemple dans un registre, pour communiquée qu'une détection d'états représentatifs d'une autorisation d'accès du débogage est faite sur lesdits signaux de commande du débogage (dbgen ; niden ; spiden ; spniden).

Dans une étape optionnelle 207, des mesures de protection CNTRMES du système sont activées en cas d'une détection d'au moins un état représentatif d'une autorisation d'accès du débogage, et en fonction d'un état de droit d'accès du système.

L'état de droits d'accès du système est typiquement connu par un moyen de gestion des droits d'accès, par exemple mis en œuvre de façon logicielle par un entité de confiance implémentée dans un environnement sécurisé du processeur CPU.

Par exemple les mesures de protection du système peuvent comprendre une extinction du système sur puce, un effacement de données sensibles, une autodestruction du système.

## Revendications

1. Système sur puce (SOC) comportant un processeur (CPU) ayant une fonctionnalité de débogage d'un programme, configuré pour avoir des paramètres de débogage déterminés par des signaux de commande du débogage (dbgen, niden, spiden, spniden), dans lequel un circuit d'autoprotection (TAMP) est configuré pour détecter des états représentatifs d'une autorisation d'accès du débogage, sur lesdits signaux de commande du débogage.

2. Système sur puce selon la revendication 1, dans lequel le circuit d'autoprotection (TAMP) est configuré pour détecter un état représentatif d'une autorisation d'accès du débogage à un niveau sécurisé et/ou d'une autorisation d'accès du débogage à un niveau non-sécurisé, sur au moins un signal de commande du débogage paramétrant les droits d'accès respectifs (spiden, spniden ; dbgen, niden).

3. Système sur puce selon l'une des revendications 1 ou 2, dans lequel le circuit d'autoprotection (TAMP) est configuré pour détecter un état représentatif d'une autorisation d'accès invasif du débogage et/ou d'une autorisation d'accès non-invasif du débogage, sur au moins un signal de commande du débogage paramétrant le degré invasif respectifs (dbgen, spiden ; niden, spniden).

4. Système sur puce selon l'une des revendications 1 à 3, le processeur CPU étant configuré pour fournir une information d'état du système évolutive (PrdSt), dans lequel le circuit d'autoprotection est configuré pour faire ladite détection sur les signaux de commande du débogage dans tous les états du système, sauf dans un état initial « complétement ouvert » (PrdSt≠OPN).

5. Système sur puce selon l'une des revendications 1 à 4, dans lequel une entité de confiance (CPU) est configurée pour activer des mesures de protection du système, en cas de détection faite par le circuit d'autoprotection (TAMP) et en fonction d'un état de droit d'accès du système.

6. Procédé d'autoprotection d'un système sur puce (SOC) comprenant un processeur (CPU) ayant une fonctionnalité de débogage d'un programme, des signaux de commande du débogage (dbgen, niden, spiden, spniden) déterminant des paramètres de débogage du processeur (202), le procédé d'autoprotection (200) comprenant une détection (204) d'états représentatifs d'une autorisation d'accès du débogage, sur lesdits signaux de commande du débogage.

7. Procédé selon la revendication 6, comprenant une détection (204) d'un état représentatif d'une autorisation d'accès du débogage à un niveau sécurisé et/ou d'une autorisation d'accès du débogage à un niveau non-sécurisé, sur au moins un signal de commande du débogage paramétrant les droits d'accès respectifs (spiden, spniden ; dbgen, niden).

8. Procédé selon l'une des revendications 6 ou 7, comprenant une détection (204) d'un état représentatif d'une autorisation d'accès invasif du débogage et/ou d'une autorisation d'accès non-invasif du débogage, sur au moins un signal de commande du débogage paramétrant le degré invasif respectifs (dbgen, spiden ; niden, spniden).

9. Procédé selon l'une des revendications 6 à 8, dans lequel ladite détection sur les signaux de commande du débogage est faite dans tous les états du système, sauf dans un état initial « complétement ouvert » (PrdSt≠OPN), l'information de l'état du système évolutive étant fournie par le processeur (CPU).

10. Procédé selon l'une des revendications 6 à 9, dans lequel des mesures de protection du système sont activées (207) en cas de détection d'au moins un état représentatif d'une autorisation d'accès du débogage (206), et en fonction d'un état de droit d'accès du système.
